# FASCICULE DE BREVET EUROPEEN

(11) **EP 1 407 125 B1**
(45) Date de publication et mention de la délivrance du brevet: **10.01.2007**
(21) Numéro de dépôt: 02770032.7
(22) Date de dépôt: 17.07.2002
(51) Int. Cl.: F02B 75/04, F01B 9/04

(54) **MOTEUR A CYLINDREE VARIABLE**
MOTOR MIT VERÄNDERBAREM HUBRAUM
VARIABLE CYLINDER CAPACITY ENGINE

(30) Priorité: 18.07.2001 FR 0109597
(43) Date de publication de la demande: 14.04.2004
(73) Titulaire: Vianney, Rabhi, 69004 Lyon (FR)
(72) Inventeur: Vianney, Rabhi, 69004 Lyon (FR)
(74) Mandataire: Schmitt, John
(86) Numéro de dépôt international: PCT/FR2002/002546
(87) Numéro de publication internationale: WO 2003/008783

(56) Documents cités:
- FR-A- 727 994
- FR-A- 1 402 509
- FR-A- 2 763 096
- FR-A- 2 763 097
- GB-A- 221 477

## Description

La présente invention est relative à un dispositif de transmission mécanique pour le guidage du ou des pistons d'un moteur à cylindrée variable.

Le dispositif de transmission mécanique suivant la présente invention consiste à perfectionner le dispositif de transmission décrit et protégé dans la demande de brevet français n° 98 15089 appartenant au demandeur.

En effet, le dispositif de transmission décrit dans le brevet n°9815089 a nécessité de résoudre des problèmes liés à sa fabrication en ce qui concerne le poids, la rigidité et la capacité de charge des différentes pièces, les risques de grippage du piston dans le cylindre et la compacité verticale de l'ensemble du moteur.

Pour cela, le dispositif de transmission mécanique suivant la présente invention propose des solutions pour alléger les crémaillères et la roue dentée en préservant leur rigidité, pour améliorer le guidage et la fixation du piston et pour réduire l'encombrement vertical du dispositif de transmission mécanique.

Le dispositif de transmission mécanique suivant la présente invention répond aux risques de grippage du piston en réalisant d'une part un guidage dudit piston dans son cylindre et d'autre part un guidage par rapport au bloc moteur de l'organe de transmission solidaire du piston par un dispositif de guidage à roulement synchronisé.

Le dispositif de transmission mécanique suivant la présente invention est prévu de telle manière qu'il présente un encombrement vertical réduit.

Le dispositif de transmission mécanique suivant la présente invention a pour avantage de faciliter l'usinage de chaque pièce du moteur à cylindrée variable.

Le dispositif de transmission mécanique pour moteur à cylindrée variable suivant la présente invention comprend au moins un cylindre dans lequel se déplace un piston, qui est solidaire dans sa partie inférieure d'un organe de transmission coopérant, d'une part au moyen d'une crémaillère de faible dimension avec un dispositif de guidage à roulement, et d'autre part au moyen d'une autre crémaillère de forte dimension avec une roue dentée liée à une bielle, un organe de commande comprenant une crémaillère de forte dimension coopérant avec la roue dentée, des moyens de fixation du piston sur l'organe de transmission qui offrent une précontrainte de serrage et assurent son centrage, des moyens de liaison qui permettent de rigidifier les organes de transmission et de commande et d'augmenter la résistance à la flexion des dents des crémaillères de forte dimension, et des moyens d'allègement de la roue dentée qui préservent sa rigidité et sa capacité à transmettre des efforts.

Le dispositif de transmission mécanique suivant la présente invention comporte des moyens de guidage du piston qui sont constitués au niveau du cylindre par une jupe de guidage de faible hauteur, solidaire du piston, et au niveau de l'organe de transmission par un dispositif de guidage à roulement qui comprend un seul rouleau synchronisé.

Le dispositif de transmission mécanique suivant la présente invention comporte des moyens de fixation du piston sur l'organe de transmission qui sont constitués d'un alésage fileté réalisé dans un pied de soutènement du piston, et d'un axe fileté vertical solidaire de l'organe de transmission, qui coopère avec l'alésage fileté, pour obtenir une fixation offrant une précontrainte de serrage du piston sur l'organe de transmission.

Le dispositif de transmission mécanique suivant la présente invention comporte un piston dont l'alésage fileté comprend un alésage coaxial lisse qui coopère avec une portion lisse prévue sur l'axe vertical de l'organe de transmission afin d'assurer le centrage du piston lors de sa fixation sur l'organe de transmission.

Le dispositif de transmission mécanique suivant la présente invention comporte un piston dont le pied de soutènement présente dans sa partie interne un alésage fileté communiquant avec des ouvertures radiales qui débouchent dans la partie supérieure du pied de soutènement.

Le dispositif de transmission mécanique suivant la présente invention comporte un piston dont les ouvertures radiales débouchent entre des ailettes prévues sur le pourtour externe du pied de soutènement.

Le dispositif de transmission mécanique suivant la présente invention comporte un piston pourvu, entre la jupe de guidage et une gorge de segment, de canaux qui débouchent entre les ailettes du pied de soutènement.

Le dispositif de transmission mécanique suivant la présente invention comporte des moyens de liaison reliant les dents de la crémaillère de forte dimension de l'organe de transmission qui sont constitués de joues latérales permettant de rigidifier l'organe de transmission et d'augmenter la résistance des dents de la crémaillère de forte dimension à la flexion.

Le dispositif de transmission mécanique suivant la présente invention comporte un organe de transmission dont les joues latérales peuvent être utilisées comme pistes de roulement venant coopérer avec des pistes de roulement positionnées latéralement sur la roue dentée.

Le dispositif de transmission mécanique suivant la présente invention comporte des moyens de liaison reliant les dents de la crémaillère de forte dimension de l'organe de commande qui sont constitués de joues latérales permettant de rigidifier l'organe de commande et d'augmenter la résistance des dents de la crémaillère de forte dimension à la flexion.

Le dispositif de transmission mécanique suivant la présente invention comporte un organe de commande dont les joues latérales peuvent être utilisées comme pistes de roulement venant coopérer avec des pistes de roulement positionnées latéralement sur la roue dentée.

Le dispositif de transmission mécanique suivant la présente invention comporte des organes de transmission et de commande dont les crémaillères de forte dimension comprennent des joues latérales qui sont réalisées à partir de l'usinage et/ou du forgeage des corps constituant lesdits organes de transmission et de commande.

Le dispositif de transmission mécanique suivant la présente invention comporte des organes de transmission et de commande dont les crémaillères de forte dimension comprennent des joues latérales qui sont rapportées et fixées sur des corps constituant lesdits organes de transmission et de commande.

Le dispositif de transmission mécanique suivant la présente invention comporte une roue dentée présentant un dégagement sur son profil supérieur permettant de réduire l'encombrement vertical du moteur.

Le dispositif de transmission mécanique suivant la présente invention comporte une roue dentée qui est constituée de deux demi roues dentées assemblées l'une à l'autre.

Le dispositif de transmission mécanique suivant la présente invention comporte une roue dentée, qui est constituée de deux demi roues dentées assemblées l'une à l'autre présentant un dégagement sur leur profil supérieur permettant de réduire l'encombrement vertical du moteur.

Le dispositif de transmission mécanique suivant la présente invention comporte des moyens d'allègement de la roue dentée qui sont constitués d'au moins un évidement.

Le dispositif de transmission mécanique suivant la présente invention comporte une roue dentée et des crémaillères de forte dimension appartenant aux organes de transmission et de commande dont les dents sont de largeurs différentes.

Le dispositif de transmission mécanique suivant la présente invention comporte une roue dentée et des crémaillères de forte dimension appartenant aux organes de transmission et de commande dont les dents sont de dimensions différentes.

Le dispositif de transmission mécanique suivant la présente invention comporte une roue dentée et des crémaillères de forte dimension appartenant aux organes de transmission et de commande dont les dents sont de profils différents.

Le dispositif de transmission mécanique suivant la présente invention comporte une roue dentée dont les dents présentent des empreintes sur leurs faces latérales qui déterminent la raideur du bord de ces dents.

Le dispositif de transmission mécanique suivant la présente invention comporte une roue dentée, dont les faces internes de l'évidemment central présentent des surfaces de guidage latéral du pied de bielle.

Le dispositif de transmission mécanique suivant la présente invention comporte une roue dentée, dont les faces internes de chaque demi roue dentée présentent une surface de guidage latéral du pied de bielle.

Le dispositif de transmission mécanique suivant la présente invention comporte une roue dentée dont l'axe de pivotement situé dans un alésage est décalé par rapport au centre du cercle primitif de la roue dentée permettant d'obtenir des variantes dans la cinématique du piston.

Le dispositif de transmission mécanique suivant la présente invention comporte un organe de transmission dont l'axe fileté présente en son milieu un trou qui débouche d'une part au dessus d'une piste de roulement de l'organe de transmission et d'autre part dans l'alésage fileté ménagé dans le pied de soutènement du piston.

Le dispositif de transmission mécanique suivant la présente invention comporte des organes de transmission et de commande dont les pistes de roulement sont réalisées à partir de l'usinage et/ou du forgeage des corps constituant lesdits organes de transmission et de commande.

Le dispositif de transmission mécanique suivant la présente invention comporte un organe de transmission qui est pourvu de moyens d'allégement.

Le dispositif de transmission mécanique suivant la présente invention comporte un dispositif de guidage à roulement qui est constitué d'un rouleau synchronisé et d'un dispositif à crémaillère de faible dimension solidaire du bloc moteur qui coopère avec la crémaillère de faible dimension de l'organe de transmission afin d'assurer d'une part un guidage de l'organe de transmission sur le bloc moteur et d'autre part la synchronisation du déplacement vertical dudit rouleau par rapport au piston.

Le dispositif de transmission mécanique suivant la présente invention comporte un dispositif de guidage à roulement dont le rouleau est constitué d'un corps cylindrique comportant des pignons à chaque extrémité et une gorge de guidage axial prévue entre les pignons.

Le dispositif de transmission mécanique suivant la présente invention comporte un dispositif à crémaillère solidaire du bloc moteur et qui est constitué d'un corps central formant une piste de roulement comportant en son milieu une nervure verticale qui coopère avec la gorge de guidage du rouleau afin d'en assurer le guidage latéral et de crémaillères qui sont fixées sur les bords verticaux dudit corps pour coopérer avec les pignons du rouleau pour assurer la synchronisation du déplacement vertical dudit rouleau avec celui du piston.

La description qui va suivre en regard des dessins annexés, donnés à titre d'exemples non limitatifs, permettra de mieux comprendre l'invention, les caractéristiques qu'elle présente et les avantages qu'elle est susceptible de procurer :
Figure 1 est une vue en perspective illustrant l'ensemble des pièces constituant le dispositif de transmission mécanique suivant la présente invention.
Figure 2 est une vue en perspective éclatée représentant le dispositif de transmission mécanique suivant la présente invention.
Figures 3 à 8 sont des vues représentant en détail le piston du dispositif de transmission mécanique suivant la présente invention.
Figures 9 à 13 sont des vues illustrant en détail l'organe de transmission solidaire du piston du dispositif de transmission mécanique suivant la présente invention.
Figure 14 est une vue en perspective montrant en détail une partie du dispositif de guidage à roulement suivant la présente invention.
Figures 15 à 18 sont des vues représentant une roue dentée du dispositif de transmission mécanique suivant la présente invention.
Figure 19 est une vue en perspective montrant en détail l'organe de commande coopérant avec une roue dentée du dispositif de transmission mécanique suivant la présente invention.

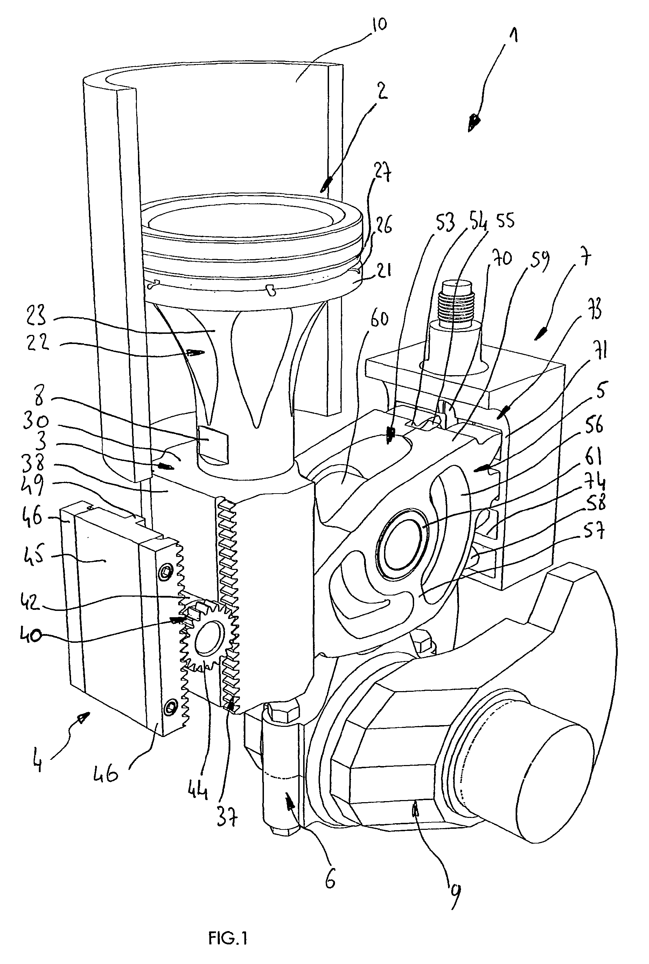

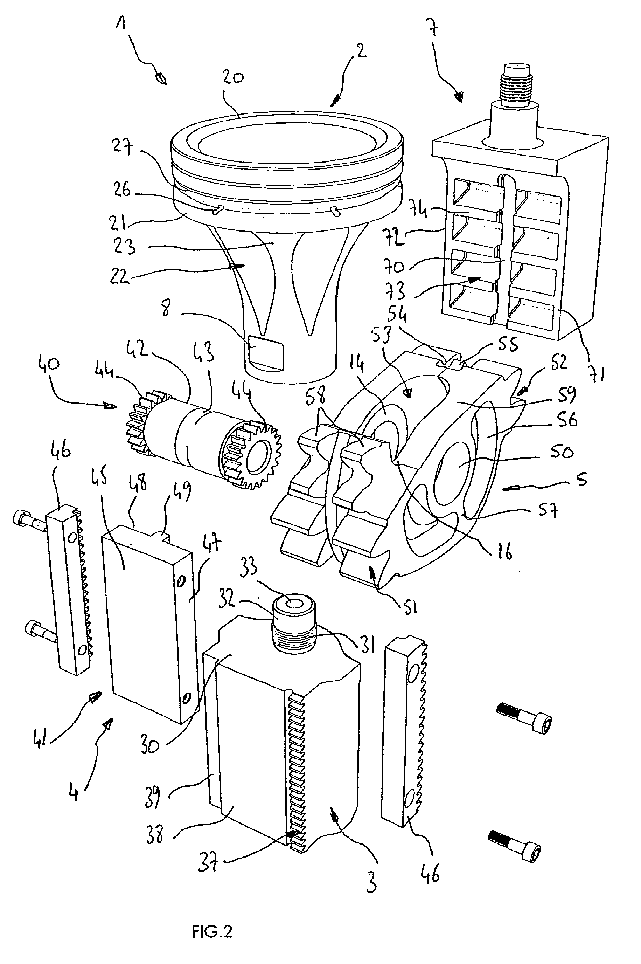

On a représenté en figures 1 et 2, un dispositif de transmission mécanique 1 pour moteur à cylindrée variable comportant un piston 2 qui est guidé et entraîné en translation dans un cylindre 10 du bloc moteur.

Le piston 2 est solidaire dans sa partie inférieure d'un organe de transmission 3 qui coopère, d'une part avec un dispositif de guidage à roulement 4, et d'autre part avec une roue dentée 5.

La roue dentée 5 réalise la transmission du mouvement entre un vilebrequin 9 et l'organe de transmission 3 solidaire du piston 2 par l'intermédiaire d'une bielle 6 sur laquelle elle est montée, au moyen d'un axe de liaison 61 qui autorise son pivotement.

La roue dentée 5 coopère à l'opposé de l'organe de transmission 3 avec un autre organe dit organe de commande 7 qui est monté dans une cavité, ou sur un guide, aménagés dans le bloc moteur.

La position de l'organe de commande 7 par rapport au bloc moteur est assurée par un dispositif de contrôle, non représenté, mais qui est décrit dans une demande de brevet français n° 98 04601 appartenant au demandeur.

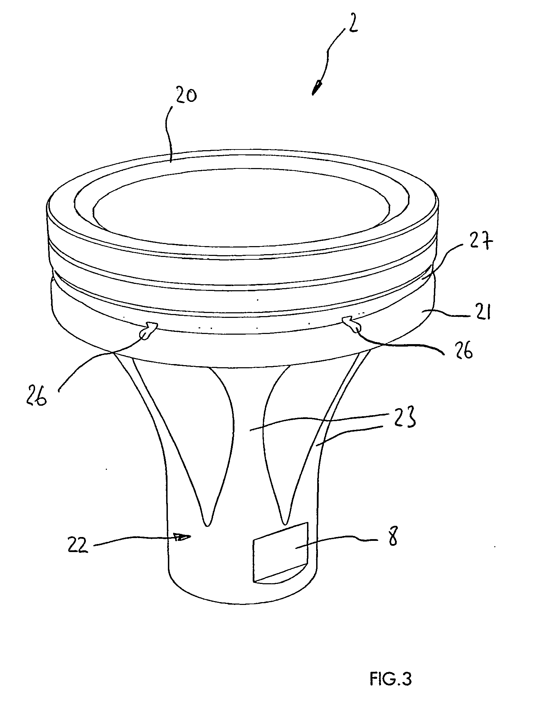

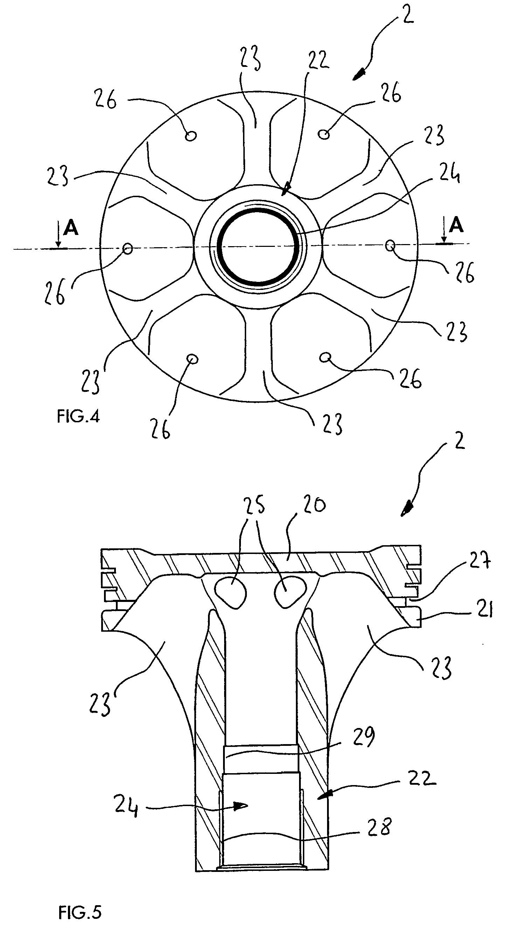

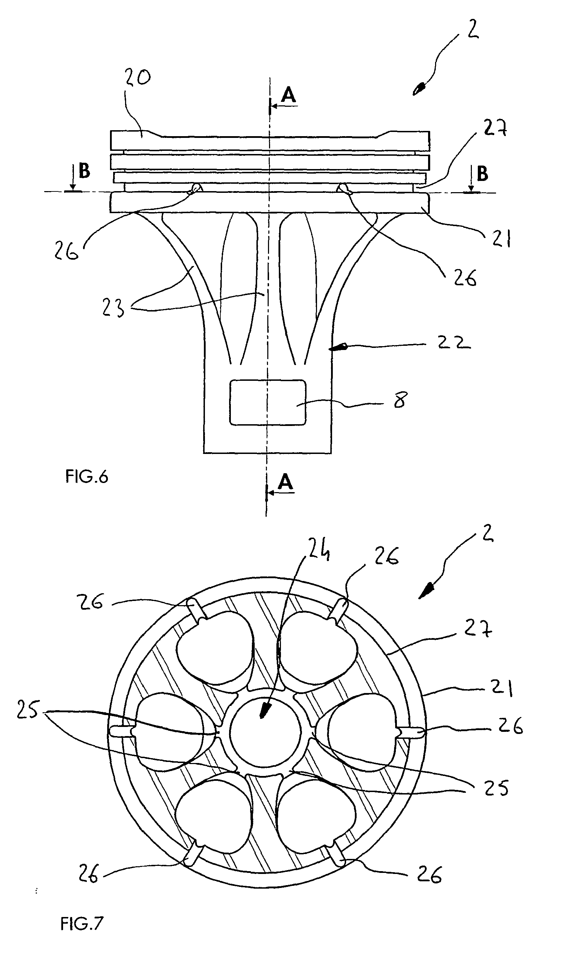

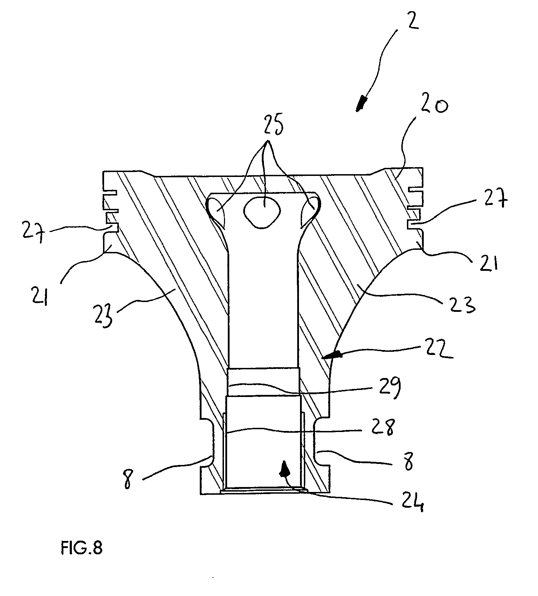

En figures 3 à 8, on a montré le piston 2 qui est constitué d'un disque épais 20 pourvu de gorges pouvant recevoir respectivement les segments de feu, de compression et racleurs connus en soi.

Le disque 20 comporte dans sa partie inférieure une jupe de guidage 21 de faible hauteur assurant le guidage du piston 2 dans le cylindre 10.

La face inférieure du disque épais 20 est solidaire d'un pied de soutènement 22 portant sur son pourtour externe des ailettes 23.

Le pied de soutènement 22 comporte dans sa partie interne un alésage 24 qui débouche dans des ouvertures radiales 25 ménagées dans la partie supérieure dudit pied de soutènement.

Les ouvertures radiales 25 débouchent entre les ailettes 23 du pied de soutènement 22.

Le piston 2 comporte entre la jupe de guidage 21 et une gorge de segment 27 des canaux 26 qui débouchent entre les ailettes 23 du pied de soutènement 22.

L'alésage 24 présente à la base du pied de soutènement 22 une partie filetée 28 et un alésage coaxial lisse de centrage 29.

Le pied de soutènement 22 comporte, sur son pourtour externe et en dessous des ailettes 23, au moins une prise d'outil pour l'entraînement en rotation du piston 2 lors de sa fixation sur l'organe de transmission 3, qui est réalisée, par exemple, par l'intermédiaire de deux empreintes 8 diamétralement opposées.

On note que le piston 2 peut être fixé à l'état d'ébauche sur l'organe de commande 3 et ensuite usiné pour réaliser l'ensemble des surfaces et notamment celles qui présentent un état fonctionnel.

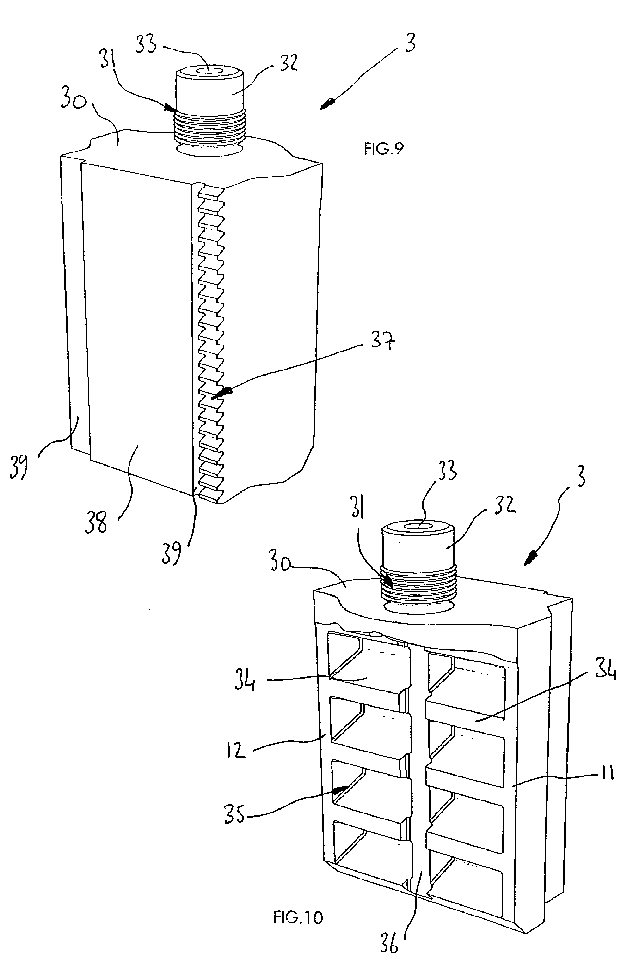

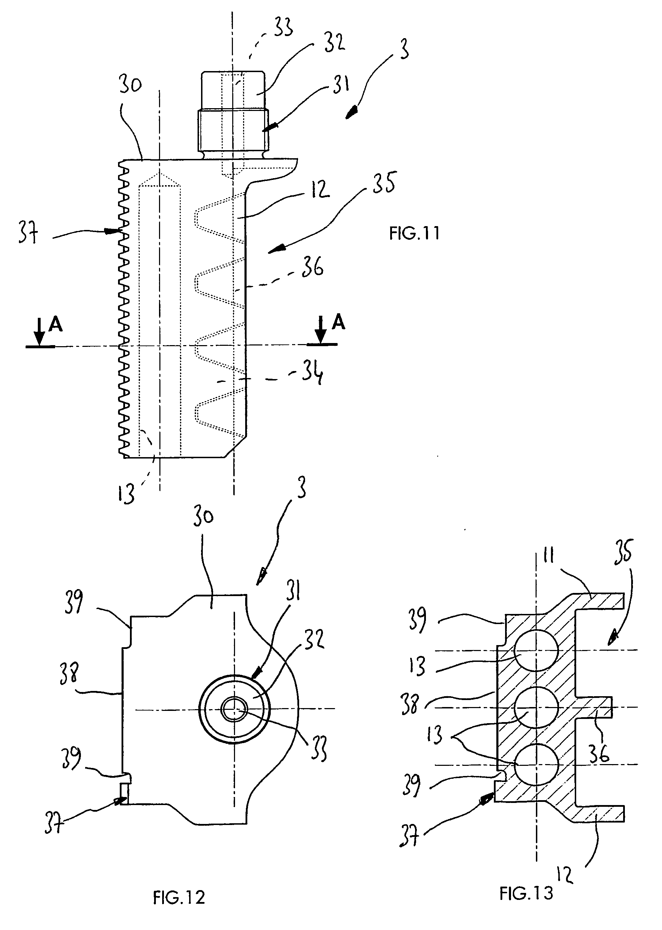

En figures 9 à 13, on a représenté l'organe de transmission 3 qui est réalisé dans un corps monobloc 30 comportant dans sa partie supérieure un axe fileté 31 s'étendant verticalement et venant coopérer avec la partie filetée 28 de l'alésage 24 lors de la fixation du piston 2.

L'axe fileté 31 comporte une portion lisse 32 qui coopère avec l'alésage coaxial lisse 29 de l'alésage fileté 24 assurant le centrage du piston 2 sur l'organe de transmission 3.

L'organe de transmission 3 comporte une crémaillère de forte dimension 35 qui est constituée de dents parallèles 34 et une piste de roulement 36 qui est disposée en retrait par rapport au sommet desdites dents et au voisinage du cercle primitif de la crémaillère de forte dimension 35.

Les dents parallèles 34 de la crémaillère de forte dimension 35 sont séparées verticalement par la piste de roulement 36.

L'organe de transmission 3 comporte des moyens de liaison reliant les dents 34 de la crémaillère de forte dimension 35 qui sont constitués de joues latérales 11 et 12 permettant de rigidifier l'organe de transmission 3 et d'augmenter la résistance des dents 34 de la crémaillère de forte dimension 35 à la flexion.

Les joues latérales 11, 12 et la piste de roulement 36 sont réalisées à partir de l'usinage et/ou du forgeage du corps 30 constituant l'organe de transmission 3.

On peut prévoir que les joues latérales 11 et 12 peuvent être rapportées et fixées sur le corps 30 de l'organe de transmission 3.

A titre de variante, les joues latérales 11 et 12 peuvent être utilisées comme piste de roulement venant coopérer avec des pistes de roulement positionnées latéralement sur la roue dentée 5. Dans ce cas, la piste de roulement 36 peut être supprimée.

L'axe fileté 31 comporte en son milieu un trou 33 qui débouche d'une part à l'intérieur de l'alésage 24 du piston 2 et d'autre part au dessus de la piste de roulement 36 séparant les dents 34 de la crémaillère de forte dimension 35.

Le trou 33 coopère lors du fonctionnement du moteur, à la lubrification de la piste de roulement 36 car il communique directement avec l'alésage interne 24 du piston 2 qui reçoit, par l'intermédiaire des ouvertures radiales 25, de l'huile en provenance de la partie basse du moteur.

En effet, l'huile de lubrification du moteur est injectée par des buses, non représentées, ou projetée par barbotage sur la face inférieure du piston 2.

Ainsi, l'huile circule à l'intérieur de l'alésage 24 du piston 2 et entre les ailettes 23 par l'intermédiaire des ouvertures radiales 25.

L'organe de transmission 3 comporte, à l'opposé de la crémaillère de forte dimension 35 et sur l'un de ses bords verticaux 39, une autre crémaillère de faible dimension 37 et une piste de roulement 38 qui coopèrent avec le dispositif de guidage à roulement 4 solidaire du bloc moteur.

La crémaillère de faible dimension 37 peut être usinée directement dans le corps 30 ou rapportée et fixée sur ce dernier. Il peut être également prévue une crémaillère 37 sur chacun des bords verticaux 39 du corps 30 en fonction de la constitution du dispositif de guidage à roulement 4.

Le corps 30 de l'organe de transmission 3 est pourvu de moyens d'allègement qui sont, par exemple, constitués d'une série de trous d'allègement 13, non débouchants.

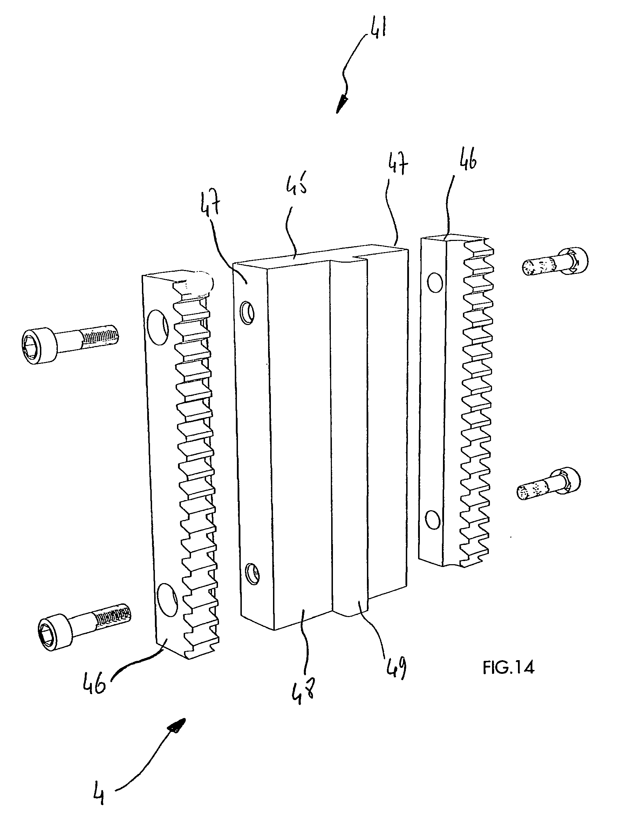

En figures 2 et 14, on a illustré le dispositif de guidage à roulement 4 qui est constitué d'un rouleau synchronisé 40 et d'un dispositif à crémaillère 41 solidaire du bloc moteur, afin d'assurer d'une part un guidage de l'organe de transmission 3 sur le bloc moteur, et d'autre part la synchronisation du déplacement vertical dudit rouleau par rapport au piston 2.

Le rouleau 40 est constitué d'un corps cylindrique 42 comportant à chaque extrémité des pignons 44.

Le corps cylindrique 42 présente en son milieu et entre les pignons 44 une gorge de guidage 43.

Le dispositif à crémaillère 41 est constitué d'un corps central 45 et de crémaillères 46 qui sont fixées sur les bords verticaux 47 dudit corps. Le corps 45 comporte une piste de roulement 48 et une nervure verticale 49.

Le premier pignon 44 du rouleau 40 coopère d'une part avec la crémaillère de faible dimension 37 de l'organe de transmission 3, et d'autre part avec l'une des crémaillères 46 du dispositif à crémaillère 41.

Le second pignon 44 du rouleau 40 coopère uniquement avec l'autre crémaillère 46 du dispositif 41, tandis que la nervure verticale 49 du corps 45 coopère avec la gorge de guidage 43 du corps 42 pour assurer un guidage latéral du rouleau 40.

Le corps 42 du rouleau 40 assure le guidage de l'organe de transmission 3 en roulant d'une part sur la piste de roulement 38 dudit organe et d'autre part sur la piste 48 du corps 45 du dispositif à crémaillère 41.

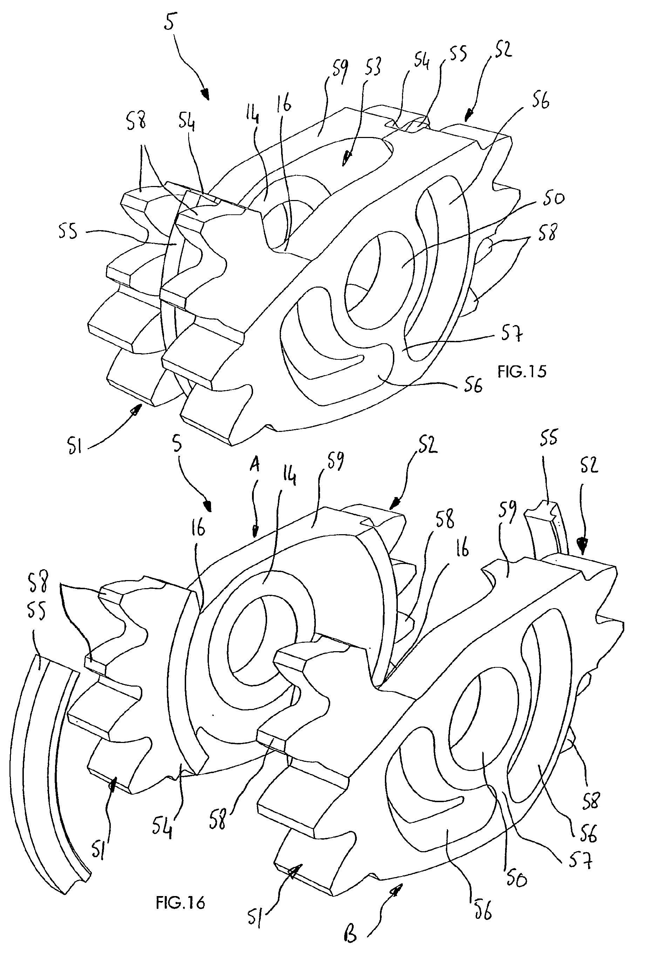

En figures 1, 15 et 16, on a représenté la roue dentée 5 du dispositif de transmission mécanique 1 suivant la présente invention.

La roue dentée 5 est constituée de deux demi roues dentées A et B qui sont assemblées l'une à l'autre, par exemple, par soudage, par brasage, par soudage par faisceaux d'électrons, par soudage laser, ou par brasage à induction électromagnétique.

La roue dentée 5, constituée ou non de deux demi roues dentées A et B, présente un dégagement 16 sur son profil supérieur 59 permettant de réduire l'encombrement vertical de l'ensemble du dispositif de transmission suivant l'invention.

La roue dentée 5 présente également un évidement central 53 dans lequel débouche un alésage 50 pour la mise en place du pied 60 de la bielle 6 par l'intermédiaire de l'axe de liaison 61.

Les faces internes de l'évidemment central 53 de la roue dentée 5 présentent des surfaces de guidage latéral 14 du pied 60 de bielle 6.

Egalement, les faces internes de chaque demi roue dentée A et B de la roue dentée 5 présentent une surface de guidage latéral 14 du pied 60 de bielle 6.

La roue dentée 5 comporte une première denture 51 coopérant avec les dents 34 de la crémaillère de forte dimension 35 de l'organe de transmission 3 solidaire du piston 2 et une seconde denture 52 coopérant avec la crémaillère de forte dimension 73 de l'organe de commande 7.

Chaque denture 51, 52, comporte en son milieu une gorge 54 coaxiale au cercle primitif de la roue dentée 5.

A l'intérieur de chaque gorge 54 est fixée une bande de roulement 55 présentant un profil courbe similaire à celui de ladite gorge. Chaque bande de roulement 55 est fixée, par exemple, par soudage laser ou par soudage par faisceau d'électrons dans la gorge courbe 54 correspondante.

La roue dentée 5 comporte des évidements 56, débouchants ou non débouchants dans l'évidemment central 53. Les évidements 56 sont prévus pour alléger la roue dentée 5 tout en préservant sa rigidité et sa capacité de charge.

Les évidements 56 peuvent être séparés les uns des autres par des voiles 57 afin de rigidifier la structure de la roue dentée 5.

La denture 51 comporte dans sa partie supérieure des dents 58 de largeur réduite par rapport aux autres dents de la roue dentée 5.

Le dégagement supérieur 16 de la roue dentée 5 et les dents 58 permettent de réduire l'encombrement vertical du dispositif de transmission mécanique 1.

En effet, selon cette configuration, les dents 58 pénètrent d'avantage à l'intérieur du cylindre 10 lorsque le piston 2 se trouve en position haute.

Egalement, la denture 52 comporte, dans sa partie inférieure, des dents 58 de largeur réduite par rapport aux autres dents afin de rapprocher le centre de gravité de la roue dentée 5 de son axe de pivotement.

L'axe de pivotement de la roue dentée 5 situé dans l'alésage 50 peut être décalé par rapport au centre du cercle primitif de ladite roue dentée. Le décalage de l'axe de pivotement de la roue dentée 5 permet d'obtenir des variantes dans la cinématique du piston 2.

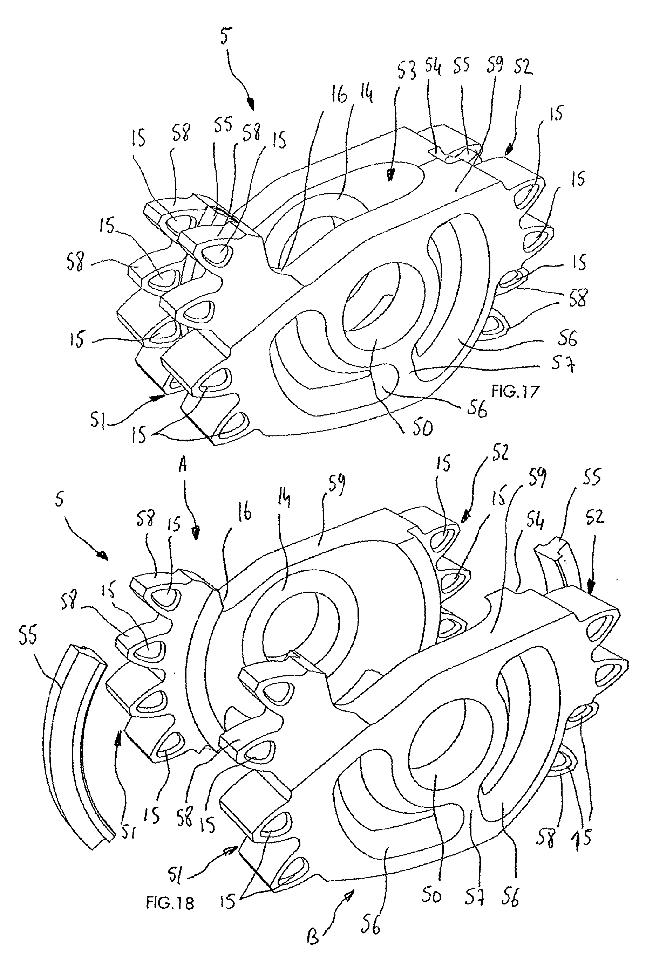

En figures 17 et 18, on a représenté la roue dentée 5 pourvue de moyens permettant de maîtriser l'effet de bord des dentures.

On sait que pour éviter des contraintes exagérées sur les bords des dentures, on peut réaliser une correction des dentures, couramment appelée « bombé ».

Cette opération coûteuse en industrie peut être remplacée par la maîtrise de la raideur des dents de la roue dentée 5 sur leur largeur, et particulièrement sur les bords desdites dents.

Cette maîtrise, objet de la présente invention, sera obtenue par la réalisation d'au moins une empreinte 15 sur chaque coté des dents de la roue dentée 5.

Ces empreintes 15, ont des formes telles qu'elles réduisent la raideur des bords des dents de la roue dentée 5 afin de limiter les contraintes dues à l'effet de bord.

Ces empreintes 15 peuvent être réalisées lors du forgeage de la roue dentée 5.

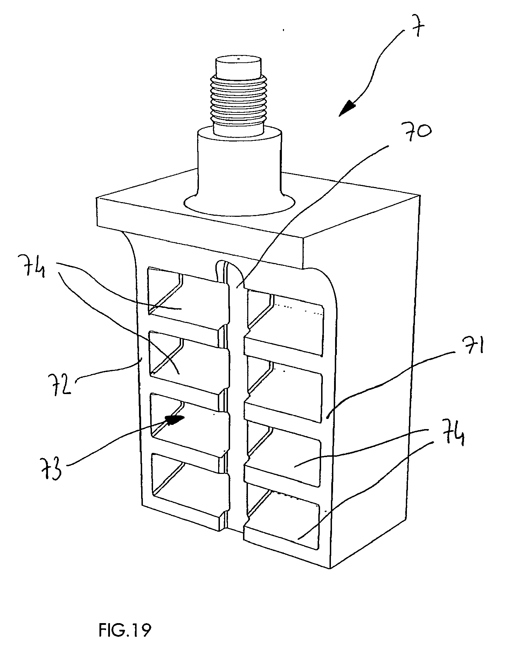

En figure 19, on a montré l'organe de commande 7 qui comporte une crémaillère de forte dimension 73 et une piste de roulement verticale 70 avec laquelle coopère la bande de roulement 55 prévue au milieu de la denture 52 de la roue dentée 5.

Les dents 74 parallèles de la crémaillère de forte dimension 73 sont séparées verticalement par la piste de roulement 70.

L'organe de commande 7 comporte des moyens de liaison reliant les dents 74 de la crémaillère de forte dimension 73 qui sont constitués de joues latérales 71 et 72 permettant de rigidifier l'organe de commande 7 et d'augmenter la résistance des dents de la crémaillère de forte dimension 73 à la flexion.

Les joues latérales 71, 72 et la piste de roulement 70 sont réalisées à partir de l'usinage et/ou du forgeage du corps constituant l'organe de commande 7.

On peut prévoir que les joues latérales 71 et 72 peuvent être rapportées et fixées sur le corps de l'organe de commande 7.

A titre de variante, les joues latérales 71 et 72 peuvent être utilisées comme piste de roulement venant coopérer avec des pistes de roulement positionnées latéralement sur la roue dentée 5. Dans ce cas, la piste de roulement 70 peut être supprimée.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tout autre équivalent.

## Revendications

1. Dispositif de transmission mécanique pour moteur à cylindrée variable comprenant au moins un cylindre (10) dans lequel se déplace un piston (2), qui est solidaire dans sa partie inférieure d'un organe de transmission (3) coopérant, d'une part au moyen d'une crémaillère de faible dimension (37) avec un dispositif de guidage à roulement (4), et d'autre part au moyen d'une autre crémaillère de forte dimension (35) avec une roue dentée (5) liée à une bielle (6), un organe de commande (7) comprenant une crémaillère de forte dimension (73) coopérant avec la roue dentée (5), **caractérisé en ce qu'**il comprend :
• des moyens de fixation du piston (2) sur l'organe de transmission (3) qui sont constitués d'un alésage fileté (24) réalisé dans un pied de soutènement (22) du piston (2), et d'un axe fileté vertical (31) solidaire de l'organe de transmission (3), qui coopère avec l'alésage fileté (24), pour obtenir une fixation offrant une précontrainte de serrage du piston (2) sur l'organe de transmission (3),
• des moyens de liaison (11, 12 ; 71, 72) qui permettent de rigidifier les organes de transmission (3) et/ou de commande (7) et d'augmenter la résistance à la flexion des dents des crémaillères de forte dimension (35, 73),
• et des moyens d'allègement (56) de la roue dentée (5) qui sont constitués d'au moins un évidement (56) préservant sa rigidité et sa capacité de charge.

2. Dispositif de transmission mécanique suivant la revendication 1, **caractérisé en ce qu'**il comporte des moyens de guidage du piston (2) qui sont constitués au niveau du cylindre (10) par une jupe de guidage (21) de faible hauteur, solidaire du piston (2), et au niveau de l'organe de transmission (3) par un dispositif de guidage à roulement (4) qui comprend un seul rouleau synchronisé (40).

3. Dispositif de transmission mécanique suivant la revendication 1, **caractérisé en ce qu'**il comporte un piston (2) dont l'alésage fileté (24) comprend un alésage coaxial lisse (29) coopérant avec une portion lisse (32) prévue sur l'axe vertical (31) de l'organe de transmission (3) afin d'assurer le centrage du piston (2) lors de sa fixation sur l'organe de transmission (3).

4. Dispositif de transmission mécanique suivant la revendication 1, **caractérisé en ce que** le pied de soutènement (22) du piston (2) présente dans sa partie interne un alésage fileté (24) communiquant avec des ouvertures radiales (25) qui débouchent dans la partie supérieure dudit pied de soutènement.

5. Dispositif de transmission mécanique suivant la revendication 4, **caractérisé en ce que** les ouvertures radiales (25) du piston (2) débouchent entre des ailettes (23) prévues sur le pourtour externe du pied de soutènement (22).

6. Dispositif de transmission mécanique suivant la revendication 2, **caractérisé en ce que** le piston (2) comporte, entre la jupe de guidage (21) et une gorge de segment (27), des canaux (26) qui débouchent entre les ailettes (23) du pied de soutènement (22).

7. Dispositif de transmission mécanique suivant la revendication 1, **caractérisé en ce qu'**il comporte des moyens de liaison reliant les dents (34) de la crémaillère de forte dimension (35) de l'organe de transmission (3) qui sont constitués de joues latérales (11, 12) permettant de rigidifier l'organe de transmission (3) et d'augmenter la résistance des dents (34) de la crémaillère de forte dimension (35) à la flexion.

8. Dispositif de transmission mécanique suivant la revendication 7, **caractérisé en ce que** les joues latérales (11, 12) peuvent être utilisées comme pistes de roulement venant coopérer avec des pistes de roulement positionnées latéralement sur la roue dentée (5).

9. Dispositif de transmission mécanique suivant la revendication 1, **caractérisé en ce qu'**il comporte des moyens de liaison reliant les dents (74) de la crémaillère de forte dimension (73) de l'organe de commande (7) qui sont constitués de joues latérales (71, 72) permettant de rigidifier l'organe de commande (7) et d'augmenter la résistance des dents (74) de la crémaillère de forte dimension (73) à la flexion.

10. Dispositif de transmission mécanique suivant la revendication 8, **caractérisé en ce que** les joues latérales (71, 72) peuvent être utilisées comme pistes de roulement venant coopérer avec des pistes de roulement positionnées latéralement sur la roue dentée (5).

11. Dispositif de transmission mécanique suivant l'une quelconque des revendications 7 et 9, **caractérisé en ce qu'**il comporte des organes de transmission (3) et de commande (7) dont les crémaillères de forte dimension (35, 73) comprennent des joues latérales (11, 12 ; 71, 72) qui sont réalisées à partir de l'usinage et/ou du forgeage des corps constituant lesdits organes de transmission et de commande.

12. Dispositif de transmission mécanique suivant l'une quelconque des revendications 7 et 9, **caractérisé en ce qu'**il comporte des organes de transmission (3) et de commande (7) dont les crémaillères de forte dimension (35, 73) comprennent des joues latérales (11, 12 ; 71, 72) qui sont rapportées et fixées sur des corps constituant lesdits organes de transmission et de commande.

13. Dispositif de transmission mécanique suivant la revendication 1, **caractérisé en ce qu'**il comporte une roue dentée (5) présentant un dégagement (16) sur son profil supérieur (59) permettant de réduire l'encombrement vertical du moteur.

14. Dispositif de transmission mécanique suivant la revendication 1, **caractérisé en ce qu'**il comporte une roue dentée (5) qui est constituée de deux demi roues dentées (A, B) assemblées l'une à l'autre.

15. Dispositif de transmission mécanique suivant la revendication 14, **caractérisé en ce qu'**il comporte une roue dentée (5), qui est constituée de deux demi roues dentées (A, B) assemblées l'une à l'autre et présentant un dégagement (16) sur leur profil supérieur (59) permettant de réduire l'encombrement vertical du moteur.

16. Dispositif de transmission mécanique suivant la revendication 1, **caractérisé en ce qu'**il comporte une roue dentée (5) et des crémaillères de forte dimension (35, 73) appartenant aux organes de transmission (3) et de commande (7) dont les dents sont de largeurs différentes.

17. Dispositif de transmission mécanique suivant la revendication 1, **caractérisé en ce qu'**il comporte une roue dentée (5) et des crémaillères de forte dimension (35, 73) appartenant aux organes de transmission (3) et de commande (7) dont les dents sont de dimensions différentes.

18. Dispositif de transmission mécanique suivant la revendication 1, **caractérisé en ce qu'**il comporte une roue dentée (5) et des crémaillères de forte dimension (35, 73) appartenant aux organes de transmission (3) et de commande (7) dont les dents sont de profils différents.

19. Dispositif de transmission mécanique suivant la revendication 1, **caractérisé en ce qu'**il comporte une roue dentée (5) dont les dents présentent des empreintes (15) sur leurs faces latérales qui déterminent la raideur du bord de ces dents.

20. Dispositif de transmission mécanique suivant la revendication 13, **caractérisé en ce que** la roue dentée (5), comporte un évidemment central (53) dont les faces internes présentent des surfaces de guidage latéral (14) du pied (60) de bielle (6).

21. Dispositif de transmission mécanique suivant la revendication 14, **caractérisé en ce qu'**il comporte une roue dentée (5), dont les faces internes de chaque demi roue dentée (A, B) présentent une surface de guidage latéral (14) du pied (60) de bielle (6).

22. Dispositif de transmission mécanique suivant l'une quelconque des revendications 13 et 14, **caractérisé en ce que** la roue dentée (5) présente un axe de pivotement situé dans un alésage (50) qui est décalé par rapport au centre du cercle primitif de ladite roue dentée (5) permettant d'obtenir des variantes dans la cinématique du piston (2).

23. Dispositif de transmission mécanique suivant la revendication 1, **caractérisé en ce qu'**il comporte un organe de transmission (3) dont l'axe fileté (31) présente en son milieu un trou (33) qui débouche d'une part au-dessus d'une piste de roulement (36) de l'organe de transmission (3) et d'autre part dans l'alésage fileté (24) ménagé dans le pied de soutènement (22) du piston (2).

24. Dispositif de transmission mécanique suivant la revendication 1, **caractérisé en ce que** les organes de transmission (3) et de commande (7) comportent des pistes de roulement (36, 70) qui sont réalisées à partir de l'usinage des corps constituant lesdits organes de transmission et de commande.

25. Dispositif de transmission mécanique suivant la revendication 1, **caractérisé en ce qu'**il comporte un organe de transmission (3) qui est pourvu de moyens d'allégement (13).

26. Dispositif de transmission mécanique suivant la revendication 1, **caractérisé en ce qu'**il comporte un dispositif de guidage à roulement (4) qui est constitué d'un rouleau synchronisé (40) et d'un dispositif à crémaillère de faible dimension (41) solidaire du bloc moteur qui coopère avec la crémaillère de faible dimension (37) de l'organe de transmission (3) afin d'assurer d'une part un guidage de l'organe de transmission (3) sur le bloc moteur et d'autre part la synchronisation du déplacement vertical dudit rouleau (40) par rapport au piston (2).

27. Dispositif de transmission mécanique suivant la revendication 26, **caractérisé en ce que** le rouleau (40) est constitué d'un corps cylindrique (42) comportant à chaque extrémité des pignons (44) et une gorge de guidage (43) prévue entre les pignons.

28. Dispositif de transmission mécanique suivant la revendication 26, **caractérisé en ce que** le dispositif à crémaillère (41) solidaire du bloc moteur est constitué d'un corps central (45) formant une piste de roulement (48) comportant en son milieu une nervure verticale (49) qui coopère avec la gorge de guidage (43) du rouleau (40) afin d'en assurer le guidage latéral, et de crémaillères (46) qui sont fixées sur les bords verticaux (47) dudit corps (45) pour coopérer avec les pignons (44) du rouleau (40) pour assurer la synchronisation du déplacement vertical dudit rouleau avec celui du piston (2).

## Claims

1. Mechanical transmission device for a variable cylinder capacity engine comprising at least one cylinder (10) in which there moves a piston (2) which is secured at its lower part to a transmission member (3) collaborating, on the one hand, by means of a small-sized rack (37) with a rolling guide device (4) and, on the other hand, by means of another, large-sized rack (35), with a toothed wheel (5) connected to a connecting rod (6), a control member (7) comprising a large-sized rack (73) collaborating with the toothed wheel (5), **characterized in that** it comprises:
• means for fixing the piston (2) onto the transmission member (3) which consist of a threaded bore (24) produced in a supporting leg (22) of the piston (2) and of a vertical threaded rod (31) secured to the transmission member (3), which collaborates with the threaded bore (24) to obtain a fixing that offers preload in the clamping of the piston (2) onto the transmission member (3),
• connecting means (11, 12; 71, 72) which stiffen the transmission (3) and/or control (7) members and increase the bending strength of the teeth of the large-sized racks (35, 73),
• and lightening means (56) for lightening the toothed wheel (5) which consist of at least one cavity (56) preserving its rigidity and load-bearing capacity.

2. Mechanical transmission device according to Claim 1, **characterized in that** it comprises means for guiding the piston (2) which consist, at the cylinder (10), of a short guide skirt (21) secured to the piston (2) and, at the transmission member (3), of a rolling guide device (4) which comprises a single synchronized roller (40).

3. Mechanical transmission device according to Claim 1, **characterized in that** it comprises a piston (2) of which the threaded bore (24) comprises a plain coaxial bore (29) collaborating with a plain portion (32) provided on the vertical rod (31) of the transmission member (3) so as to center the piston (2) as it is fixed onto the transmission member (3).

4. Mechanical transmission device according to Claim 1, **characterized in that** the supporting leg (22) of the piston (2) has, in its internal part, a threaded bore (24) communicating with radial openings (25) which open into the upper part of said supporting leg.

5. Mechanical transmission device according to Claim 4, **characterized in that** the radial openings (25) in the piston (2) open between fins (23) provided on the external periphery of the supporting leg (22).

6. Mechanical transmission device according to Claim 2, **characterized in that** the piston (2) comprises, between the guide skirt (21) and a piston ring groove (27), ducts (26) which open between the fins (23) of the supporting leg (22).

7. Mechanical transmission device according to Claim 1, **characterized in that** it comprises connecting means connecting the teeth (34) of the large-sized rack (35) of the transmission member (3) which consist of lateral cheeks (11, 12) stiffening the transmission member (3) and increasing the bending strength of the teeth (34) of the large-sized rack (35).

8. Mechanical transmission device according to Claim 7, **characterized in that** the lateral cheeks (11, 12) can be used as runway tracks collaborating with runway tracks positioned laterally on the toothed wheel (5).

9. Mechanical transmission device according to Claim 1, **characterized in that** it comprises connecting means connecting the teeth (74) of the large-sized rack (73) of the control member (7) which consist of lateral cheeks (71, 72) stiffening the control member (7) and increasing the bending strength of the teeth (74) of the large-sized rack (73).

10. Mechanical transmission device according to Claim 8, **characterized in that** the lateral cheeks (71, 72) can be used as runway tracks collaborating with runway tracks positioned laterally on the toothed wheel (5).

11. Mechanical transmission device according to either one of Claims 7 and 9, **characterized in that** it comprises transmission (3) and control (7) members in which the large-sized racks (35, 73) comprise lateral cheeks (11, 12; 71, 72) which are produced by machining and/or forging the bodies that make up said transmission and control members.

12. Mechanical transmission device according to either one of Claims 7 and 9, **characterized in that** it comprises transmission (3) and control (7) members in which the large-sized racks (35, 73) comprise lateral cheeks (11, 12; 71, 72) which are added onto and fixed to bodies that make up said transmission and control members.

13. Mechanical transmission device according to Claim 1, **characterized in that** it comprises a toothed wheel (5) exhibiting a cutout (16) on its upper profile (59) so as to reduce the vertical bulk of the engine.

14. Mechanical transmission device according to Claim 1, **characterized in that** it comprises a toothed wheel (5) which is made up of two toothed half-wheels (A, B) joined together.

15. Mechanical transmission device according to Claim 14, **characterized in that** it comprises a toothed wheel (5) which is made up of two toothed half-wheels (A, B) joined together exhibiting a cutout (16) on their upper profile (59) so as to reduce the vertical bulk of the engine.

16. Mechanical transmission device according to Claim 1, **characterized in that** it comprises a toothed wheel (5) and large-sized racks (35, 73) belonging to the transmission (3) and control (7) members, the teeth of which have different widths.

17. Mechanical transmission device according to Claim 1, **characterized in that** it comprises a toothed wheel (5) and large-sized racks (35, 73) belonging to the transmission (3) and control (7) members, the teeth of which are of different dimensions.

18. Mechanical transmission device according to Claim 1, **characterized in that** it comprises a toothed wheel (5) and large-sized racks (35, 73) belonging to the transmission (3) and control (7) members, the teeth of which have different profiles.

19. Mechanical transmission device according to Claim 1, **characterized in that** it comprises a toothed wheel (5) the teeth of which exhibit impressions (15) on their lateral faces which determine the stiffness of the edge of these teeth.

20. Mechanical transmission device according to Claim 13, **characterized in that** the toothed wheel (5) comprises a central cavity (53) of which the internal faces exhibit guide surfaces (14) for the lateral guidance of the small end (60) of the connecting rod (6).

21. Mechanical transmission device according to Claim 14, **characterized in that** it comprises a toothed wheel (5) of which the internal faces of each toothed half-wheel (A, B) exhibit a guide surface (14) for the lateral guidance of the small end (60) of the connecting rod (6).

22. Mechanical transmission device according to either one of Claims 13 and 14, **characterized in that** the toothed wheel (5) exhibits a pivot axis situated in a bore (50) which is offset from the center of the pitch circle of said toothed wheel (5) so as to obtain variations in the kinematics of the piston (2).

23. Mechanical transmission device according to Claim 1, **characterized in that** it comprises a transmission member (3) of which the threaded rod (31) exhibits, at its middle, a hole (33) which opens, on the one hand, above a runway track (36) of the transmission member (3) and, on the other hand, into the threaded bore (24) formed in the supporting leg (22) of the piston (2).

24. Mechanical transmission device according to Claim 1, **characterized in that** the transmission (3) and control (7) members comprise runway tracks (36, 70) which are produced from the machining of the bodies that make up said transmission and control members.

25. Mechanical transmission device according to Claim 1, **characterized in that** it comprises a transmission member (3) which is provided with lightening means (13).

26. Mechanical transmission device according to Claim 1, **characterized in that** it comprises a rolling guide device (4) which is made up of a synchronized roller (40) and of a small-sized rack device (41) secured to the engine block which collaborates with the small-sized rack (37) of the transmission member (3) so as, on the one hand, to guide the transmission member (3) on the engine block and, on the other hand, to synchronize the vertical movement of said roller (40) with respect to the piston (2).

27. Mechanical transmission device according to Claim 26, **characterized in that** the roller (40) consists of a cylindrical body (42.) comprising, at each end, pinions (44) and a guide groove (43) provided between the pinions.

28. Mechanical transmission device according to Claim 26, **characterized in that** the rack device (41) secured to the engine block is made up of a central body (45) forming a runway track (48) comprising, at its middle, a vertical rib (49) which collaborates with the guide groove (43) of the roller (40) so as to provide lateral guidance therefor, and of racks (46) which are fixed onto the vertical edges (47) of said body (45) to collaborate with the pinions (44) of the roller (40) so as to synchronize the vertical movement of said roller with that of the piston (2).

## Patentansprüche

1. Mechanische Übertragungsvorrichtung für einen Motor mit variablem Hubraum, der mindestens einen Zylinder (10) aufweist, in dem sich ein Kolben (2) bewegt, der fest in seinem unteren Teil mit einem Übertragungsorgan (3) verbunden ist, das einerseits mittels einer Zahnstange mit geringer Größe (37) mit einer Führungsvorrichtung mit Lager (4), und andererseits mittels einer weiteren Zahnstange mit großer Größe (35) mit einem Zahnrad (5), das mit einem Pleuel (6), verbunden ist, zusammenarbeitet, wobei ein Steuerorgan (7) eine Zahnstange mit großer Größe (73) aufweist, die mit dem Zahnrad (5) zusammenarbeitet, **dadurch gekennzeichnet, dass** sie Folgendes umfasst:
• Mittel zum Befestigen des Kolbens (2) an dem Übertragungsorgan (3), die aus einer Gewindebohrung (24) bestehen, die in einem Stützfuß (22) des Kolbens (2) ausgeführt ist, und einem senkrechten Gewindebolzen (31), der mit dem Übertragungsorgan (3) fest verbunden ist, das mit der Gewindebohrung (24) zusammenarbeitet, um eine Befestigung zu erzielen, die eine Vorspannung zum Festziehen des Kolbens (2) auf dem Übertragungsorgan (3) bietet,
• Verbindungsmittel (11, 12; 71, 72), die es erlauben, die Übertragungsorgane (3) und/oder die Steuerorgane (7) starr zu machen und den Biegewiderstand der Zähne der Zahnstangen mit großer Größe (35, 73) zu erhöhen,
• und Mittel zum Erleichtern (56) des Zahnrads (5), die aus mindestens einer Aussparung (56) bestehen, die ihre Starrheit und ihre Lastkapazität wahren.

2. Mechanische Übertragungsvorrichtung nach Anspruch 1, **dadurch gekennzeichnet, dass** sie Führungsmittel des Kolbens (2) aufweist, die auf der Ebene des Zylinders (10) aus einer Führungsschürze (21) mit geringer Höhe, die mit dem Kolben (2) fest verbunden ist, und auf der Ebene des Übertragungsorgans (3) aus einer Führungsvorrichtung mit Lager (4), die eine einzige synchronisierte Walze (40) aufweist, bestehen.

3. Mechanische Übertragungsvorrichtung nach Anspruch 1 **dadurch gekennzeichnet, dass** sie einen Kolben (2) aufweist, dessen Gewindebohrung (24) eine glatte koaxiale Bohrung (29) aufweist, die mit einem glatten Abschnitt (32), der auf der vertikalen Achse (31) des Übertragungsorgans (3) vorgesehen ist, zusammenarbeitet, um das Zentrieren des Kolbens (2) bei seinem Befestigen auf dem Übertragungsorgan (3) sicherzustellen.

4. Mechanische Übertragungsvorrichtung nach Anspruch 1, **dadurch gekennzeichnet, dass** der Stützfuß (22) des Kolbens (2) in seinem inneren Teil eine Gewindebohrung (24) aufweist, die mit radialen Öffnungen (25) kommuniziert, die in den oberen Teil des Stützfußes münden.

5. Mechanische Übertragungsvorrichtung nach Anspruch 4, **dadurch gekennzeichnet, dass** die radialen Öffnungen (25) des Kolbens (2) zwischen Flügeln (23) münden, die auf dem äußeren Umkreis des Stützfußes (22) vorgesehen sind.

6. Mechanische Übertragungsvorrichtung nach Anspruch 2, **dadurch gekennzeichnet, dass** der Kolben (2) zwischen der Führungsschürze (21) und einer Segmenthohlkehle (27) Kanäle (26) aufweist, die zwischen den Flügeln (23) des Stützfußes (22) münden.

7. Mechanische Übertragungsvorrichtung nach Anspruch 1, **dadurch gekennzeichnet, dass** sie Verbindungsmittel aufweist, die die Zähne (34) der Zahnstange mit großer Größe (35) des Übertragungsorgans (3) verbinden, die aus seitlichen Backen (11, 12) bestehen, die es erlauben, das Übertragungsorgan (3) zu versteifen und die Biegefestigkeit der Zähne (34) der Zahnstange mit großer Größe (35) zu erhöhen.

8. Mechanische Übertragungsvorrichtung nach Anspruch 7, **dadurch gekennzeichnet, dass** die seitlichen Backen (11, 12) als Rollspuren verwendet werden können, die mit Rollspuren zusammenwirken, die seitlich auf dem Zahnrad (5) positioniert sind.

9. Mechanische Übertragungsvorrichtung nach Anspruch 1, **dadurch gekennzeichnet, dass** sie Verbindungsmittel aufweist, die die Zähne (74) der Zahnstange mit großer Größe (73) des Steuerorgans (7) verbinden, die aus seitlichen Backen (71, 72) bestehen, die es erlauben, das Steuerorgan (7) zu versteifen und die Biegefestigkeit der Zähne (74) der Zahnstange mit großer Größe (73) zu erhöhen.

10. Mechanische Übertragungsvorrichtung nach Anspruch 8, **dadurch gekennzeichnet, dass** die seitlichen Backen (71, 72) als Rollspuren verwendet werden können, die mit Rollspuren zusammenwirken, die seitlich auf dem Zahnrad (5) positioniert sind.

11. Mechanische Übertragungsvorrichtung nach einem der Ansprüche 7 und 9, **dadurch gekennzeichnet, dass** sie Übertragungs- (3) und Steuerorgane (7) aufweist, von welchen die Zahnstangen mit großer Größe (35, 73) seitliche Backen (11, 12; 71, 72) umfassen, die ausgehend vom Bearbeiten und/oder Schmieden der Körper, die die Übertragungs- und Steuerorgane bilden, ausgeführt sind.

12. Vorrichtung nach einem der Ansprüche 7 und 9, **dadurch gekennzeichnet, dass** sie Übertragungs- (3) und Steuerorgane (7) aufweist, deren Zahnstangen mit großer Größe (35, 73) seitliche Backen (11, 12; 71, 72) aufweisen, die auf den Körpern angebaut und befestigt sind, die die Übertragungs- und Steuerorgane bilden.

13. Mechanische Übertragungsvorrichtung nach Anspruch 1, **dadurch gekennzeichnet, dass** sie ein Zahnrad (5) umfasst, das einen Ausschnitt (16) auf seinem oberen Profil (59) aufweist, der es erlaubt, den senkrechten Platzbedarf des Motors zu verringern.

14. Mechanische Übertragungsvorrichtung nach Anspruch 1, **dadurch gekennzeichnet, dass** sie ein Zahnrad (5) aufweist, das aus zwei halben Zahnrädern (A, B) besteht, die miteinander zusammengebaut sind.

15. Mechanische Übertragungsvorrichtung nach Anspruch 14, **dadurch gekennzeichnet, dass** sie ein Zahnrad (5) aufweist, das aus zwei halben Zahnrädern (A, B) besteht, die miteinander zusammengebaut sind und einen Ausschnitt (16) auf dem oberen Profil (59) aufweisen, der es erlaubt, den senkrechten Platzbedarf des Motors zu verringern.

16. Mechanische Übertragungsvorrichtung nach Anspruch 1, **dadurch gekennzeichnet, dass** sie ein Zahnrad (5) und Zahnstangen mit großer Größe (35, 73) aufweist, die zu den Übertragungs- (3) und Steuerorganen (7) gehören, deren Zähne unterschiedliche Breiten haben.

17. Mechanische Übertragungsvorrichtung nach Anspruch 1, **dadurch gekennzeichnet, dass** sie ein Zahnrad (5) und Zahnstangen mit großer Größe (35, 73) aufweist, die zu den Übertragungs- (3) und Steuerorganen (7) gehören, deren Zähne unterschiedliche Maße haben.

18. Mechanische Übertragungsvorrichtung nach Anspruch 1, **dadurch gekennzeichnet, dass** sie ein Zahnrad (5) und Zahnstangen mit großer Größe (35, 73) aufweist, die zu den Übertragungs- (3) und Steuerorganen (7) gehören, deren Zähne unterschiedliche Profile haben.

19. Mechanische Übertragungsvorrichtung nach Anspruch 1, **dadurch gekennzeichnet, dass** sie ein Zahnrad (5) aufweist, dessen Zähne Abdrücke (15) auf ihren seitlichen Flächen aufweisen, die die Steifheit des Rands dieser Zähne bestimmen.

20. Mechanische Übertragungsvorrichtung nach Anspruch 13, **dadurch gekennzeichnet, dass** das Zahnrad (5) eine zentrale Aussparung (53) aufweist, deren Innenseiten seitliche Führungsflächen (14) des Fußes (60) des Pleuels (6) aufweisen.

21. Mechanische Übertragungsvorrichtung nach Anspruch 14, **dadurch gekennzeichnet, dass** sie ein Zahnrad (5) aufweist, dessen Innenseiten jedes halben Zahnrads (A, B) eine seitliche Führungsfläche (14) des Fußes (60) des Pleuels (6) aufweisen.

22. Mechanische Übertragungsvorrichtung nach einem der vorhergehenden Ansprüche 13 und 14, **dadurch gekennzeichnet, dass** das Zahnrad (5) eine Schwenkachse aufweist, die sich in einer Bohrung (50) befindet, die in Bezug auf die Mitte des Kopfkreises des Zahnrads (5) versetzt ist, was es erlaubt, Varianten in der Kinematik des Kolbens (2) zu erzielen.

23. Mechanische Übertragungsvorrichtung nach Anspruch 1, **dadurch gekennzeichnet, dass** sie ein Übertragungsorgan (3) aufweist, dessen Gewindebolzen (31) in seiner Mitte eine Öffnung (33) aufweist, die einerseits über einer Rollpiste (36) des Übertragungsorgans (3) mündet und andererseits in der Gewindebohrung (24), die in dem Stützfuß (22) des Kolbens (2) eingerichtet ist.

24. Mechanische Übertragungsvorrichtung nach Anspruch 1, **dadurch gekennzeichnet, dass** die Übertragungs-(3) und Steuerorgane (7) Rollspuren (36, 70) aufweisen, die ausgehend von dem Bearbeiten der Körper, die die Übertragungs- und Steuerorgane bilden, hergestellt werden.

25. Mechanische Übertragungsvorrichtung nach Anspruch 1, **dadurch gekennzeichnet, dass** sie ein Übertragungsorgan (3) aufweist, das mit Erleichterungsmitteln (13) versehen ist.

26. Mechanische Übertragungsvorrichtung nach Anspruch 1, **dadurch gekennzeichnet, dass** sie eine Führungsvorrichtung mit Lager (4) aufweist, die aus einer synchronisierten Walze (40) und einer Vorrichtung mit Zahnstange mit kleiner Größe (41) besteht, die fest mit dem Motorblock verbunden ist, der mit der Zahnstange mit kleiner Größe (37) des Übertragungsorgans (3) zusammenwirkt, um einerseits eine Führung des Übertragungsorgans (3) auf dem Motorblock und andererseits die Synchronisation der senkrechten Bewegung der Walze (40) in Bezug auf den Kolben (2) sicherzustellen.

27. Mechanische Übertragungsvorrichtung nach Anspruch 26, **dadurch gekennzeichnet, dass** die Walze (40) aus einem zylindrischen Körper (42) besteht, der an jedem Ende Ritzel (44) sowie eine Führungshohlkehle (43), die zwischen den Ritzeln vorgesehen ist, aufweist.

28. Mechanische Übertragungsvorrichtung nach Anspruch 26, **dadurch gekennzeichnet, dass** die Zahnstangenvorrichtung (41), die mit dem Motorblock fest verbunden ist, aus einem zentralen Körper (45) besteht, der eine Rollpiste (48) bildet, die in ihrer Mitte eine senkrechte Rippe (49) umfasst, die mit der Führungshohlkehle (43) der Walze (40) zusammenarbeitet, um deren seitliches Führen sicherzustellen, und Zahnstangen (46), die an den senkrechten Rändern (47) des Körpers (45) befestigt sind, um mit den Ritzeln (44) der Walze (40) zusammenzuarbeiten, um die Synchronisation der senkrechten Bewegung der Walze mit der des Kolbens (2) sicherzustellen.
